# EUROPÄISCHE PATENTSCHRIFT

(11) **EP 0 727 472 B1**
(45) Veröffentlichungstag und Bekanntmachung des Hinweises auf die Patenterteilung: **03.11.1999**
(21) Anmeldenummer: 95120758.8
(22) Anmeldetag: 23.12.1995
(51) Int. Cl.: C09K 19/00, C09K 19/40, C09B 67/00, C09D 5/36, C09D 17/00

(54) **Effektlack bzw. Effektlackierung, insbesondere für Kraftfahrzeugkarosserien**
Effect lacquer, and lacquering in particular for car bodies
Laque à effets, laquage à effets en particulier pour carrosseries de véhicules automobiles

(30) Priorität: 16.02.1995 DE 19505161
(43) Veröffentlichungstag der Anmeldung: 21.08.1996
(73) Patentinhaber: DaimlerChrysler AG, 70567 Stuttgart (DE)
(72) Erfinder: Sailer, Maria-Theresia, Dr., D-89073 Ulm (DE)

(56) Entgegenhaltungen:
- EP-A- 0 358 208
- EP-A- 0 601 483
- WO-A-93/12195
- WO-A-95/32247

## Beschreibung

Die Erfindung betrifft Effektlacke auf der Basis von flüssigkristallinen Polymeren nach dem Oberbegriff des 1. Patentanspruches und damit lackierte Gebrauchsgegenstände, insbesondere Kraftfahrzeugkarosserien, nach dem Oberbegriff des 5. Patentanspruches. Aus dem Stand der Technik gehen flüssigkristalline Interferenzpigmente für Effektlacke beispielsweise aus der DE 40 08 076 A1, der EP 0 066 137 A1, der US-PS 5 188 760 oder der DE 42 40 743 A1 als bekannt hervor.

Bei den üblichen Fahrzeug-Uni-Lacken sind in der Regel in einem klaren Träger aus Kunstharz Farbpigmente eingelagert, die die gewünschte Farbtönung des Lackes bestimmen. Die Farbwirkung dieser Pigmente beruht auf einer spektral selektiven Absorptionswirkung, so daß von dem auftreffenden - weißen - Licht ein spektral breiter Anteil von den Pigmenten absorbiert und nur ein spektral schmaler Anteil reflektiert wird.

In dem Bemühen um brillantere Farbeindrücke insbesondere bei Fahrzeugkarosserien hat man die sog. Effektlacke entwickelt. Bei einer Gruppe daraus, nämlich den Metallic-Lacken sind u.a. kleine Metallflitter als Pigmente mit in den Träger eingemischt. Bei einer anderen Gruppe werden beschichtete Glimmerpartikel als Pigmente verwendet. Bei diesen Effektlacken ist eine bessere Farbbrillanz als bei den sog. Uni-Lacken erreichbar; außerdem ist je nach Lichteinfallrichtung und/oder Betrachtungsrichtung ein leicht geänderter Farbeindruck vorhanden, was angestrebt wird. Die EP 383 376 A1 beschreibt einen solchen Effektlack, bei dem kleine Glimmerplättchen allseits gleichmäßig mit einem vernetzten, flüssigkristallinen Polymer (LCP) in chiral-nematischer Anordnung beschichtet sind. Die Farberscheinung derartiger Pigmente kommt durch eine Interferenzerscheinung zustande. Von dem einfallenden Licht werden nur diejenigen Lichtwellen reflektiert, deren Wellenlänge mit den äquidistanten Netzebenenabständen der flüssigkri- stallinen Polymere interferieren, wogegen die Lichtanteile anderer Wellenlängen durch den klaren Lack-Körper hindurchgehen und von dem - vorzugsweise - dunklen Untergrund adsorbiert werden. Derartige, plättchenförmige, parallel zur lackierten Oberfläche ausgerichtete Interferenzpigmente haben bei orthogonaler Betrachtung eine bestimmte erste Farbe - Basis-farbe - und unter einer geneigten Betrachtungsrichtung eine zweite, kürzerwellige Farbe. Diese vom Betrachtungswinkel abhängige Farberscheinung der lackierten Oberfläche macht die Lackierung sehr effektvoll und für bestimmte Anwendungsfälle, bei denen derartige Farbeffekte von potentiellen Kunden positiv aufgenommen werden, sehr wünschenswert. Nachteilig ist die aufwendige Herstellung der Interferenzpigmente, wodurch sich der Effektlack und dementsprechend die Effektlackierung auf einem Gebrauchsgegenstand recht kostspielig gestalten.

Aus dem Stand der Technik sind Interferenzpigmenten auf der Basis von Polysiloxanen bekannt, wobei diese jeweils als Ganzes aus kleinen Bruchstücken einer dünnen vernetzten Folie aus flüssigkristallinen Polymeren bestehen. Die Interferenzpigmente selber sind farblos und klar durchsichtig. Die mit ihnen erzielbare Farbwirkung beruht auf der regelmäßigen Struktur und der gleichmäßigen Anordnung der Moleküle in dem Flüssigkristall und auf einer darauf zurückführenden Interferenz eines bestimmten spektralen Lichtanteiles, für den das Pigment reflektiv wirkt. Die anderen Lichtanteile gehen durch das Pigment hindurch. Dadurch lassen sich verblüffende Farbeffekte unterschiedlicher Art erzielen, je nach Ausgestaltung der Lackierung bzw. der zugrundeliegenden Interferenzpigmente und deren Mischung. Abgesehen von der neuartigen ästhetischen Farbwirkung der Lackierung bzw. des dazu verwendeten Lackes bietet diese Lackierung auch noch eine Reihe technischer Vorteile.

Eine Bedingung für das Auftreten von flüssigkristallinen Phasen bei den entsprechenden Polymeren ist eine starre mesogene Molekülgestalt. Die Repititionseinheiten flüssigkristalliner Polymere enthalten die mesogenen Einheiten. Die beiden am häufigsten realisierten Molekül strukturen sind die Seitenketten-LC-Polymere, bei denen die mesogenen Einheiten als Seitenketten des Polymerrückgrates chemisch fixiert sind, und die Hauptketten-LC-Polymere, bei denen die mesogenen Einheiten das Polymerrückgrat oder Teil des Polymerrückgrates bilden. Neben den Homopolymeren sind eine Vielzahl von Copolymeren darstellbar, die verschiedene mesogene Einheiten oder nichtmesogene und mesogene Einheiten enthalten können.

Der Erfindung liegt die Aufgabe zugrunde, den gattungsgemäß zugrundegelegten Effektlack direkt als Beschichtungsmaterial auf den zu lackierenden Gebrauchsgegenstand aufzubringen, wobei auch auf gewölbten Flächen ein brillanter Farbeindruck sich ergeben soll.

Die Lösung der gestellten Aufgabe erfolgt erfindungsgemäß bezüglich des Effektlackes mit den kennzeichnenden Merkmalen des 1. Patentanspruches und bezüglich des lackierten Gebrauchsgegenstandes mit den kennzeichnenden Merkmalen des Anspruches 5. Außerdem beinhaltet die Erfindung ein Verfahren zur Herstellung eines lackierten Gebrauchsgegenstandes nach den Anspruch 10.

Filme aus polymerem flüssigkristallinem Material mit vom Betrachtungswinkel abhängiger Farbigkeit können bei wesentlicher Verbesserung der Brillianz des Farbeinddrucks - im Gegensatz zu nach bisher bekannter Technik hergestellten Filmen - durch Spritzapplikation auf dreidimensional geformte Bauteile aufgebracht werden.

Die mit dem Erfindungsgegenstand erzielten Vorteile bestehen darin, daß es mit dem Effektlack bzw. mit der Effektlackierung möglich ist, eine farbgebende Schichtlage direkt und ohne weitere Zwischenschritte; d.h. ohne eine mechanische Einwirkung zwecks Orientierung des flüssigkristallinen, polymeren Materials, nicht nur auf ebene Flächen, sondern auch auf gekrümmte und/oder in sich gewölbte Flächen aufzubringen. Vorteilhafterweise ist es nicht notwendig, die farbgebende Substanz vor dem Aufbringen noch in eine Lackgrundsubstanz einzumischen. Der dabei erzielbare Farbeindruck des Effektlackes wird nach erfolgter Beschichtung des zugrundeliegenden Materials bei einem nichtvernetzbaren Ausgangsmaterial durch Einfrieren unterhalb der maßgeblichen Glastemperatur bzw. bei einem vernetzbaren Ausgangsmaterial durch Aushärten über der maßgeblichen Glastemperatur erreicht über einen entsprechenden Härtungsprozeß. Außerdem zeigen die erfindungsgemäßen Effektlacke eine sehr gute Farbbrillanz und besitzen dabei eine hervorragende Lichtbeständigkeit.

Vorteilhafterweise wird der Effektlack für sich allein direkt mittels eines Spritz- oder Tauchauftrages auf den farbig zu lakkierenden, auch gewölbten Gebrauchsgegenstand, vorzugsweise auf Kraftfahrzeugkarosserien, aufgebracht. Eine entsprechende Orientierung des flüssigkristallin-polymeren Materials wird ohne jegliche mechanische Einwirkung erreicht. Der erzielte Farbeindruck wird nach dem Beschichtungsvorgang bei einem nicht vernetzbaren Material durch Einfrieren unterhalb der maßgeblichen Glastemperatur oder - bei einem vernetzbaren Material - durch Aushärten über der maßgeblichen Glastemperatur über einen entsprechenden Härtungsprozeß erreicht.

Flüssigkristalline Materialien sind ihrer Natur nach selbstorganisierende oder selbstordnende Verbindungen, d. h. die Längsachsen ihrer mesogenen Einheiten nehmen, wenn sie sich in der flüssigkristallinen Phase befinden, von selbst eine Vorzugsrichtung ein. Diese Orientierung geschieht allerdings nur domänenweise. Damit die Reflektionsfarben chiral-nematischer Phasen zum Tragen kommen, müssen die entsprechenden Mesogene zusätzlich eine bestimmte Anordnung bezüglich der Oberfläche einnehmen: Die Längsachsen der mesogenen Einheiten müssen in einer Ebene parallel zur Substrat-Oberfläche liegen (homogene Anordnung). Damit sind die Netzebenen gebildet, von denen die winkelabhängige Interferenz ausgeht. Diese Orientierung stellt sich nicht in ausreichendem Maß von selbst ein.

Die Bildung dieser Netzebenen innerhalb einer Schicht aus solchen flüssigkristalinen Polymeren kann durch die Verwendung eines automatischen Filmaufziehgerätes und die dabei wirksame mechanische Scherung erreicht werden, was praktisch jedoch nur auf ebenen Flächen möglich ist. Deswegen hat man aus solchen zunächst in ebenem Zustand hergestellten vernetzten Beschichtungen durch vorsichtiges Mahlen und Größenauswahl plättchenförmige Interferenzpigmente hergestellt und diese einem Lack beigemischt. Beim Lackieren mit einem solchen Lack erhält man eine Beschichtung, die ebenfalls einen sog. Farbflop aufweist, d.h. eine vom Betrachtungs- bzw. Beleuchtungswinkel abhängige Reflexion der Lichtanteile unterschiedlicher Wellenlänge mit ausgeprägtem Maximum an einer bestimmten Stelle des Spektrums. Wegen der Einmischung plättchenförmiger Interferenzpigmente weisen derartige Effektlacke eine Art Metallic- oder Flitter-Effekt auf, der an sich gar nicht unbedingt erwünscht ist.

Die erfindungsgemäße Möglichkeit zur Applikation von Effektlakken auf LCP-Basis besteht darin, das flüssigkristalline Polymer mit einem orientierungs-verbessernden Zusatz zu versehen und es dann unmittelbar selbst beispielsweise in einer Spritzapplikation auf die zu beschichtende Substrat-Oberfläche aufzubringen. Durch Zusatz beispielsweise eines oberflächenaktiven Polysiloxans zur Lösung des flüssigkristallinen Polymers zeigen sich nach thermischer Behandlung aus der zunächst milchigen, farblos bis weißen Beschichtung auf verhältnismäßig dunklen Substraten schließlich die Interferenzfarben aufgrund der entsprechenden chiral-nematischen Phase. Man erhält auf diese Weise eine Beschichtung mit Uni-Charakter, d.h. ohne den Flitter-Effekt, die zusätzlich einen Farbflop aufweist.

Derartige erfindungsgemäße, orientierungs-erleichternde und die interferentielle Farbwirkung verbessernde Zusätze können unabhängig von der stofflichen Basis der chiral-nematischer Polymere des Lackes eingesetzt werden. Die Applikation ist von der Art der Substrat-Oberfläche unabhängig und kann als Spritz- oder Tauchauftrag von lösungsmittel-, wasserbasierenden oder Pulverlacken durchgeführt werden.

Die die farbvertiefende Wirkung verursachenden Additive können wahlweise unmittelbar der Beschichtungsmasse zugegeben werden oder auch vor Aufbringen der Beschichtung als Vorbeschichtung appliziert werden.

Der Farbton des Untergrundes, auf den die Effektlackierung aufgetragen wird, bestimmt die Intensität der Farbwirkung einer aufgebrachten chiral-nematischen Beschichtung. Eine optimal schwarze Substrat-Oberfläche absorbiert den in bestimmtem Sinn zirkular-polarisierten Teil des eingestrahlten linear-polarisierten Lichtes, wogegen der im Gegensinn zirkular-polarisierte Teil reflektiert wird. Durch die Wahl unterschiedlicher Farbtöne der Substrat-Oberfläche wird das Verhältnis absorbierter und reflektierter Strahlung variiert. Auf diese Weise können auch mattere Farben in der Beschichtung erzielt werden.

Bei den Versuchen wurden auf unterschiedliche Substrate Lösungen eines chiral-nematischen Polymers meist mittels einer Spritzapplikation aufgetragen. Dabei kommt durch die anschließende Erwärmung im Temperaturbereich der chiral-nematischen Phase eine Orientierung der mesogenen Einheiten in Gang, die durch das erfindungsgemäße Zusetzen von entsprechenden Additiven deutlich verbessert werden kann. Die Temperatur kann dabei im gesamten chiral-nematischen Bereich variieren; je höher sie ist, desto schneller findet aufgrund der dann niedrigeren Viskosität eine Orientierung statt.

Die erhaltenen Filme wurden bezüglich folgender Kennwerte untersucht:
▷ erzielte Schichtdicke (gemessen mit dem Dualscope, Fa. Fischer),
▷ Reflexionswert der Wellenlänge maximaler Reflexion (gemessen mit dem Spektrophotometer color view der Fa. Byk Gardener, Geretsried (45°/0° Beobachtungsgeometrie, Wolfram-Halogen-Lampe, die in etwa dem CIE-Standard A entspricht, bei einer Farbtemperatur von 2854 °K),
▷ Halbwertsbreite des Reflexionsmaximums, d.h. Breite des Peaks in nm bei halber höhe von Null % aus gemessen und
▷ Verhältnis von Reflexionswert zu Halbwertsbreite.
der zuletzt genannte Verhältniswert gestattet eine Beurteilung der Güte bzw. Brillianz der erzielten Farbintensität. Eine Zusammenstellung der Werte ist in der Tabelle auf S. 14 zu finden.

Die Versuche zeigen deutlich die Verbesserung, die der Zusatz eines geeigneten Additivs gestattet. Während das zur Beurteilung herangezogene Verhältnis: Reflexion zu Halbwertsbreite bei LCP-pigmentierten Filmen mit abnehmender Schichtdicke deutlich geringer wird, um mit 29 mm Schichtdicke nur noch bei 0.23 zu liegen (Beispiel 2b), ist dieses Verhältnis bei den homogenen, mittels Spritzapplikation aufgebrachten LCP-Filmen viel besser. Je nach Rezeptur (Beispiele 3b) bis 3d), 3g)¹ bis 3g)⁴, 4b) können Werte bis 0.40 erreicht werden. Dabei ist in Rechnung zu stellen, daß der Untergrund der LCP-pigmentierten Filme aus Haftungsgründen schwärzer ist als dies bei den LCP-Filmen der Fall ist, erstere also bei der Messung vergleichsweise bessere Werte liefern werden.

Bei den Beispielen 3a) und 4a) konnte das Verhältnis von Reflexion zu Halbwertsbreite nicht ermittelt werden: ohne farbvertiefendes Additiv sind die Reflexionsbanden sehr breit, die Reflexionsfarbe nicht brilliant.

Die Reproduzierbarkeit der Lage des Reflexionsmaximums kann anhand der Versuche 3g)¹ bis 3g)⁴ beurteilt werden. Die Variation bei verschiedenen Versuchen mit der gleichen Rezeptur beträgt 15 nm. Zu berücksichtigen ist, daß das verwendete Farbmeßgerät über eine Genauigkeit von ± 5 nm verfügt.

Aus den **Figuren 1 bis 15** ist die Abhängigkeit der Farbigkeit, d.h. also der Körperfarbe, von dem qualitativen Zusatz an Lackadditiv zu den flüssigkristallinen Polymeren, von der Auftragsweise und, von der "eingefärbten" Unterlage ersichtlich. Auf der Abzisse der Diagramme ist dabei die Wellenlänge in Nanometern und auf der Ordinate die Reflektivität in %, d.h. der Reflexionsgrad oder das Reflexionsvermögen der aufgebrachten Schicht aufgetragen. Die Versuche 3b bis 3g⁴ und 4b wurden entsprechend der erfindungsgemäßen Lehre durchgeführt, wogegen die Versuche 1a, 2a, 2b, 3a und 4a Vergleichsversuch mit anderen Techniken darstellen, wovon die Versuche 3a und 4a nicht zu dem gewünschten Ergebnis einer hohen Farbbrillanz führen. Dementsprechend zeigen auch nur die zugehörigen Remissionskurven nach den Figuren 4 und 14 keine typischen, spektral schmalen Maxima in der Reflektivität.

Nachfolgend wird eine tabellarische Übersicht über die Zuordnung der einzelnen Remissionskurven bzw Figuren zu den einzelnen Versuchen gegeben und dabei die jeweils verwendete Applikationstechnik erwähnt; ferner ist ein Hinweis auf einen Orientierungs-verbessernden Zusatz aufgenommen:

| Figuren-Nr. | Versuch-Nr. | Applikationstechnik | Orientierungs-verbessernder Zusatz? |
|---|---|---|---|
| 1 | 1a | Scheren, Rakeln | nein |
| 2 | 2a | Aufsprühen | nein, LCP-Pigmente |
| 3 | 2b | Aufsprühen | nein, LCP-Pigmente |
| 4 | 3a | Aufsprühen | nein |
| 5 | 3b | Aufsprühen | ja |
| 6 | 3c | Aufsprühen | ja |
| 7 | 3d | Aufsprühen | ja |
| 8 | 3e | Aufsprühen | ja |
| 9 | 3f | Aufsprühen | ja |
| 10 | 3g ¹ | Aufsprühen | ja |
| 11 | 3g ² | Aufsprühen | ja |
| 12 | 3g ³ | Aufsprühen | ja |
| 13 | 3g ⁴ | Aufsprühen | ja |
| 14 | 4a | Aufsprühen | nein |
| 15 | 4b | Aufsprühen | ja |

### Beschreibung der Versuche:

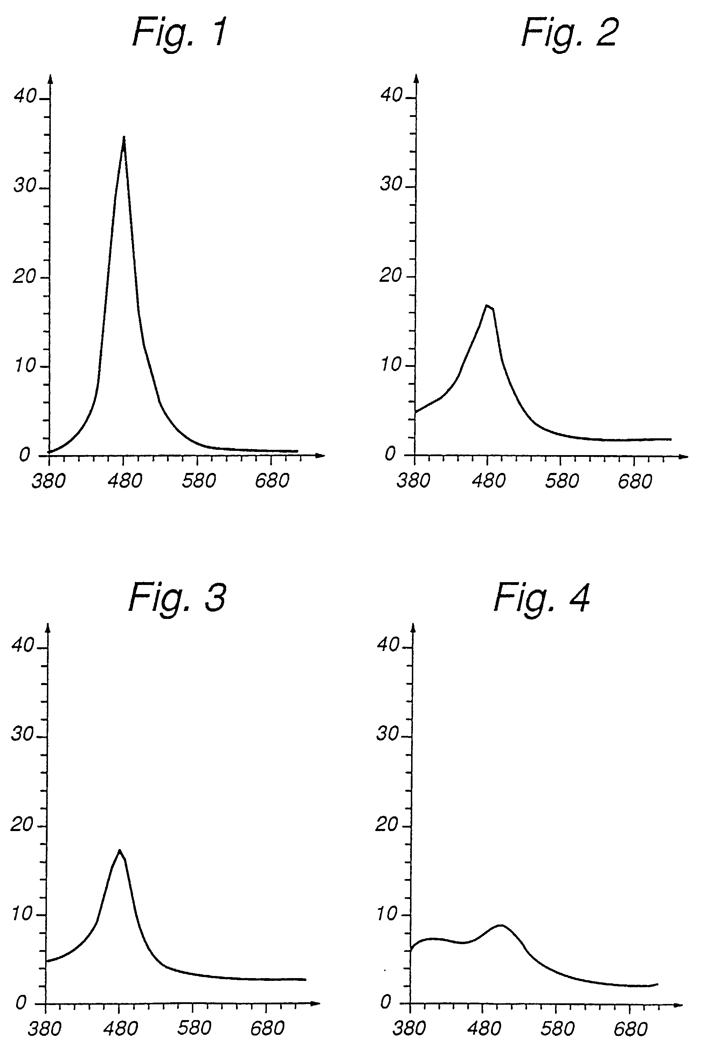

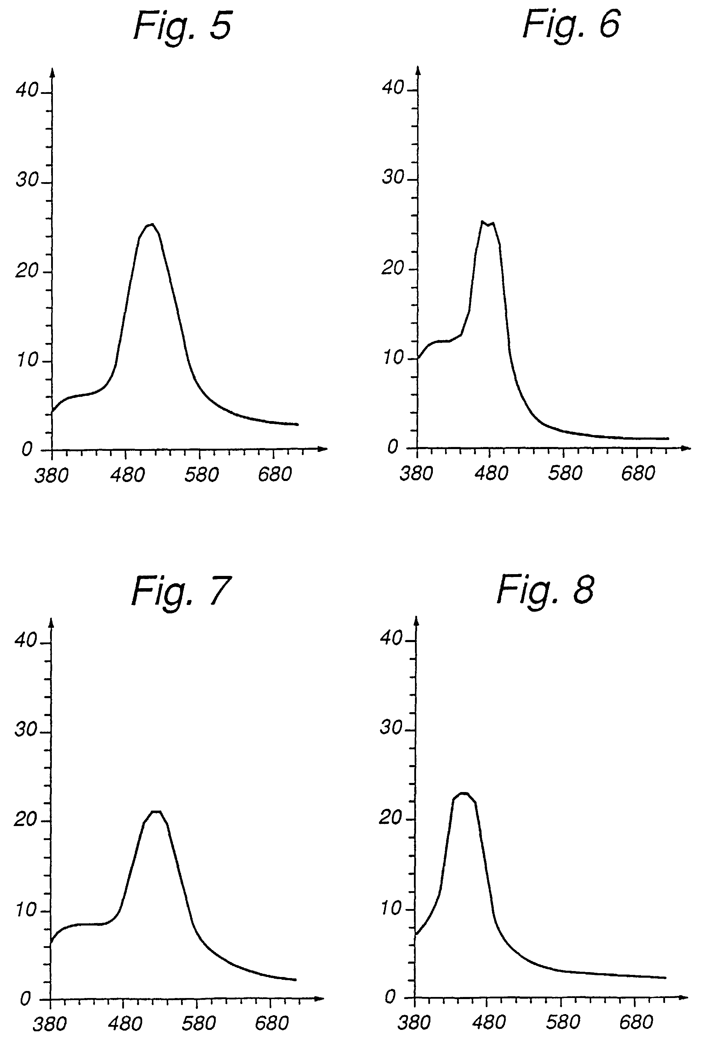

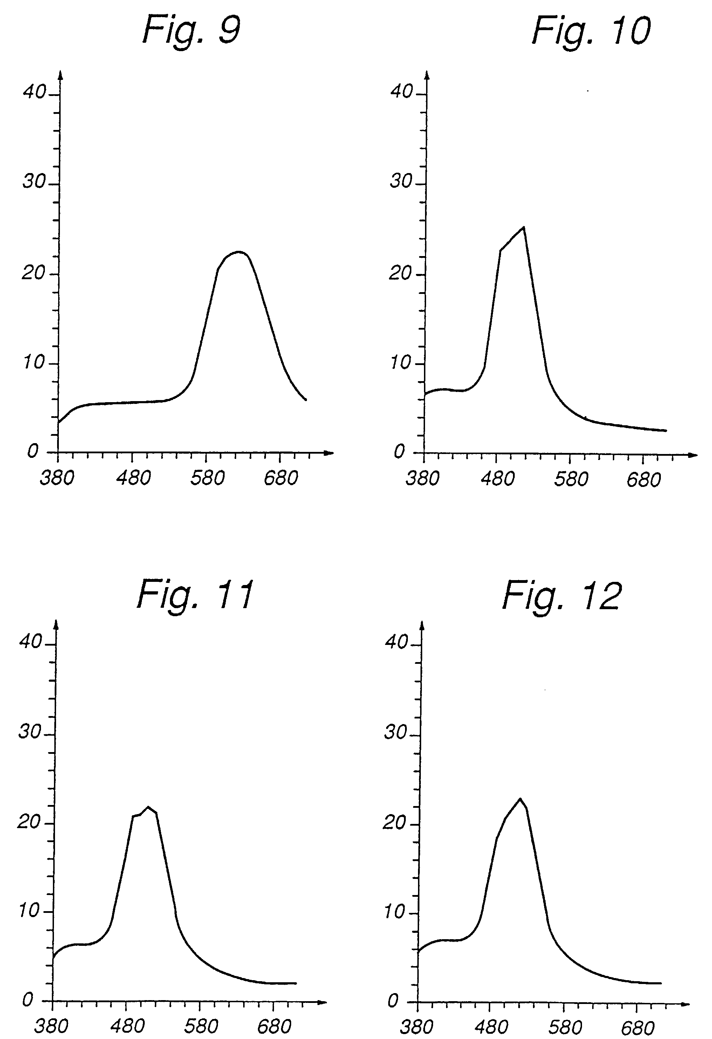

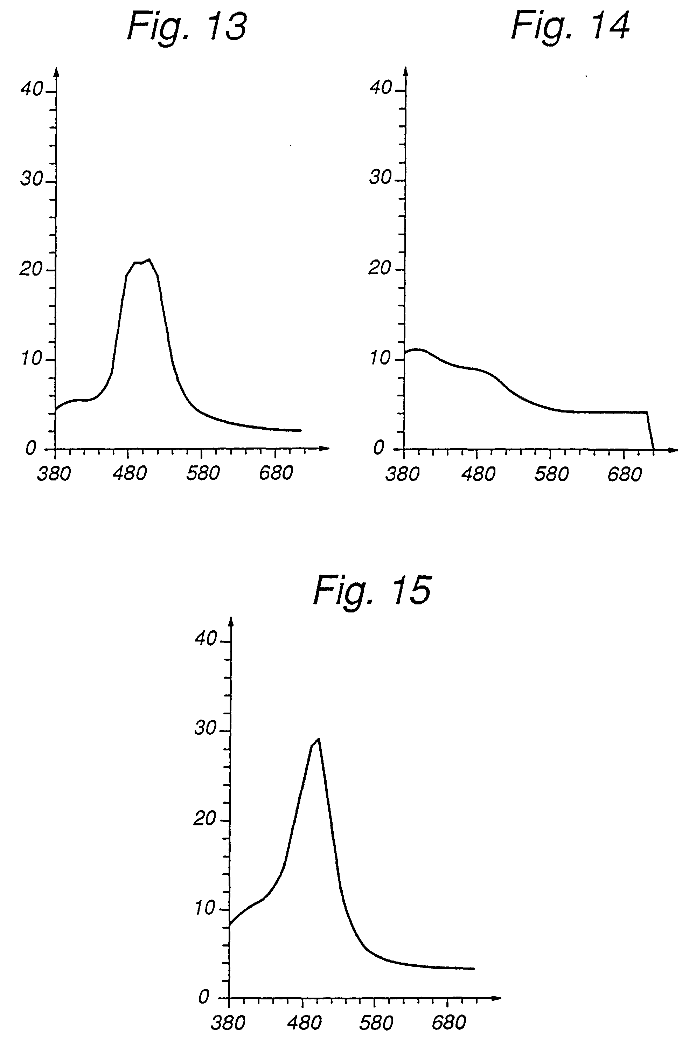

Versuch 1a: Fünf Gramm des flüssigkristallinen Polymers LCP 520 (Wacker-Chemie, München) werden auf einem schwarz grundiertem Prüfblech 10 min auf 100 °C erwärmt, die nach dem Aufschmelzvorgang zähviskose Masse mit Hilfe des automatischen Filmaufziehgerätes 4344-1 SP (Braive Instruments, Liege) bei einer Schergeschwindigkeit von 5 mm/s zu einem Film ausgezogen. Der Film wurde ausgehärtet und die Beschichtung einem Reflexionstest unterworfen. Die Remissionskurve ist in Figur 1 dargestellt. Die Beschichtung zeigt ein sehr schmalbandiges Reflexionsmaximum, welches auf die Scherwirkung beim Auftragen der LCP-Beschichtung auf das ebene Prüfblech und die dadurch bewirkte Ausrichtung der mesogenen Einheiten im LCP-Lack zurückzuführen ist. Dieses gute Ergebnis ist jedoch - wie gesagt - nur mittels mechanisch-scherender Applikation möglich, was praktisch nur auf ebenen Flächen durchführbar ist.
Versuch 2a: Vier Gew.-% LCP-Pigmente, die aus LCP 520 (Wacker-Chemie, München) hergestellt wurden, werden 30 min im Klarlack-System Standox (Herberts, Wuppertal) dispergiert, die Mischung mit Hilfe einer Spritzpistole (SATA-Farbspritztechnik, Kornwestheim) auf ein schwarz grundiertes Prüfblech aufgespritzt. Nach 25-minütigem Ablüften des Lösungsmittels wird die Lackschicht im Lacktrockenschrank 45 min bei 100 °C ausgehärtet. Die damit gewonnene Remissionskurve ist in Figur 2 dargestellt. Aufgrund der Pigmentierung der interferentiell wirkenden Schicht in kleinste scheibenförmige Flitter ordnen sich diese parrallel zum Untergrund an und erzeugen dadurch eine ähnliche Farbwirkung wie beim Versuch la. Der Peak in der Reflexion ist allerdings weniger ger stark ausgeprägt als beim Prüfblech nach Versuch la (Figur 1). Diese Applikationstechnik entspricht dem Stand der Technik nach der DE 42 40 743 A1.
Versuch 2b: Wie unter 2a), jedoch wird zunächst nach zehnminütigem Ablüften des Lösungsmittels ein weiterer Spritzgang durchgeführt. Nach 25-minütigem Ablüften des Lösungsmittels wird dann wie oben fortgefahren. Die Farbbrillanz ist ähnlich wie beim Versuch 2a, vgl. die Remissionskurve nach Figur 3.
Versuch 3a: Eine Lösung von 10.50 g LCP (grün) in 41.00 g Xylol wird mit Hilfe eines DC-Sprühgerätes (Merck, Darmstadt) auf ein mit Füller grundiertes Prüfblech aufgespritzt. Nach zehnminütigem Ablüften des Lösungsmittels wird das Prüfblech auf einer vorher auf 130 °C vorgeheizten Heizplatte 30 min. lang erwärmt. Dabei nimmt der anfangs milchig weiße Film allmählich eine mattgrüne Farbe an. Die Remissionskurve - Figur 4 - zeigt kein ausgeprägtes Maximum, eine Halbwertsbreite läßt sich nicht vernünftig ermitteln. Dieses schlechte Ergebnis ist auf die Sprühapplikation und die fehlende Zugabe von Orientierungs-erleichternden Zusätzen zurückzuführen.
Versuch 3b: Die gleiche Lösung wie unter 3a) wird mit einem Zusatz von 0.05 % Byk-310 auf ein mit Füller grundiertes Prüfblech aufgespritzt. Nach zehnminütigem Ablüften des Lösungsmittels wird das Prüfblech auf einer vorher auf 130 °C vorgeheizten Heizplatte 30 min erwärmt. Dabei nimmt der anfangs milchig weiße Film allmählich eine intensive blaugrüne Farbe mit einem deutlichen Flop ins Blaue an. Die entsprechende Remissionskurve in Figur 5 zeigt einen deutlich ausgeprägten Peak, der - im Vergleich zum Versuch 3a und der zugehörigen Remissionskurve nach Figur 4 - die farbverbessernde Wirkung des Zusatzes Byk-310 verdeutlicht.
Versuch 3c: Wie unter 3b), jedoch mit einem Zusatz von 0.10 % Troythix XYZ als Rheologie-Hilfsmittel auf ein schwarz grundiertes Prüfblech. Auch dieser Zusatz bewirkt ein deutlich schmalbandiges Reflexionsmaximum im Diagramm nach Figur 6.
Versuch 3d: Eine Lösung von 50.0 g LCP (grün) in 200.00 g Xylol wird mit einem Zusatz von 0.05 % Byk-310 und 5.00 % Cereclor S52 auf ein mit Füller grundiertes Prüfblech aufgespritzt. Die Remissionskurve zeigt Figur 7.
Versuch 3e: Wie unter 3d), jedoch mit der blauen LCP-Mischung; Remissionskurve vgl. Figur 8.
Versuch 3f: Wie unter 3d), jedoch mit einer roten LCP-Mischung; Remissionskurve vgl. Figur 9.
Versuch 3g: Eine Lösung von 20.00 g LCP (grün) in 100.00 g Toluol wird mit einem Zusatz von 0.05 % Byk-310 und 5.00 % Cereclor S52, 0.40 % Perenol F-40 und 0.40 % Additol XL 490/50 als Verlaufs-Hilfsmittel auf ein mit Füller grundiertes Prüfblech gespritzt. Dieser Versuch wurde vier mal durchgeführt, wobei die gleiche Rezeptur verwendet aber jedesmal neu angesetzt wurd. In der Tabelle sind die Einzelversuch mit hochgestellten Indexzahlen gekennzeichnet. Trotz sorgfältiger Versuchsdurchführung streuen die Remissionskurven - sie sind in den Figuren 10 bis 13 wiedergegeben - , jedoch konnte mit dem Auge kein Farbunterschied festgestellt werden. Die - relativ geringe - Streubreite bezüglich der Bewertungskriterien: Lage und Höhe des des Reflexionsmaximums, Halbwertsbreite, verhältnis von Höhe zu Halbwertsbreite kann aus den tabellarischen Angaben gewonnen werden.
Versuch 4a: Parallelversuch zu Versuch 3a, jedoch mit anderem Untergrund, nämlich einer Glasplatte. Die gleiche Lösung wie unter 3a) - also ohne orientierungs-verbessernden Zusatz - wird auf eine Glasplatte aufgespritzt. Nach zehnminütigem Ablüften des Lösungsmittels wird die Glasplatte auf einer vorher auf 130 °C vorgeheizten Heizplatte 30 min erwärmt. Auf einer schwarzen Unterlage ist die mattgrüne Reflexion des Polymerfilms zu sehen. Die Remissionskurve - vgl. Figur 14 - zeigt erwartungsgemäß keinerlei Reflexionsmaximum.
Versuch 4b: Parallelversuch zu Versuch 3b, jedoch ebenfalls mit Glasplatte als anderem Untergrund. Die gleiche Lösung wie unter 3b) wird mit einem Zusatz von 0.05 % Byk-310 auf eine Glasplatte aufgespritzt. Nach zehnminütigem Ablüften des Lösungsmittels wird die Glasplatte auf einer vorher auf 130 °C vorgeheizten Heizplatte 30 min erwärmt. Auf einer schwarzen Unterlage ist eine intensive grüne Reflexion zu sehen. Die Remissionskurve in Figur 15 zeigt wieder ein deutlich ausgeprägtes Reflexionsmaximum.

### Verwendete Materialien:

**LCP:** chiral-nematisches Polysiloxan (Wacker-Chemie, München); Mischungen aus den folgenden beiden Komponenten:

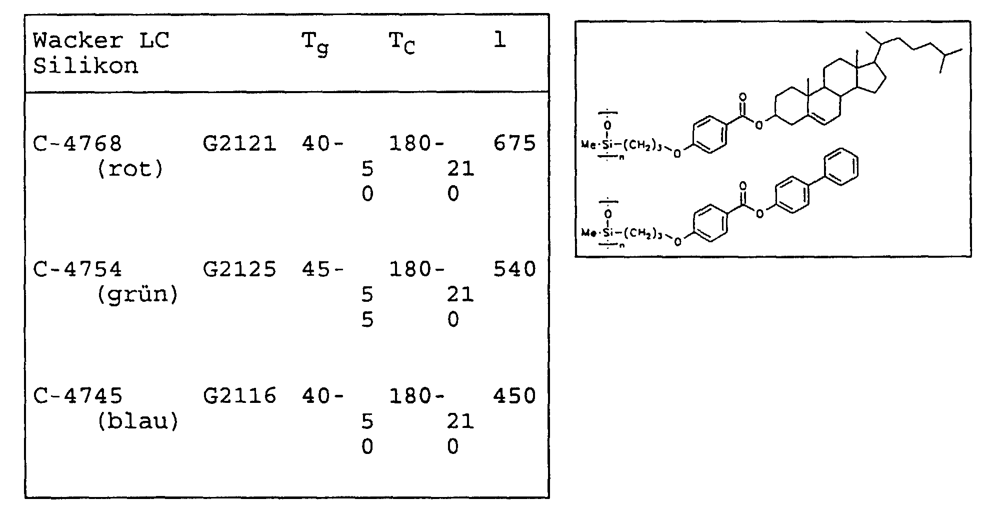

**LCP520:** Pigment (grün-blau) aus chiral-nematischem Polysiloxan (Wacker, München)
**Lackadditiv:** Byk-310 (Byk-Chemie, Wesel)
**Lackadditiv:** Troythix XYZ (Troy Chemicals, Krefeld)
**Lackadditiv:** Cereclor S52 (Deutsche ICI, Frankfurt)
**Lackadditiv:** Additol XL 490/50 (Hoechst, Frankfurt)
**Aluminium-Bleche:** P-36 (pausch Prüftechnik, Haan) (76x152 mm; 0.625 mm stark; chromatiert und mit einer schwarzen Grundierung versehen)
**Aluminium-Bleche:** P-36 (pausch-Prüftechnik, Haan) (76x152 mm; 0.625 mm stark; chromatiert)
**Grundierung anthrazit** MB Füller (Mercedes-Benz AG, Werk Sindelfingen)
**Objektträger:** (Schott Glaswerke, Mainz) (26 x 76 mm)

Tabellarische Übersicht über die Versuche und die erzielbaren Ergebnisse:

| Vers.-Nr. | Untergrund | farbvertiefendes Additiv | Schichtdicke [µm] | Max. bei [nm] | Reflexion [%] | Halbw.-breite [nm] | Verhältnis Refl. zu H.w.breite |
|---|---|---|---|---|---|---|---|
| 1a | Blech schw. | - | 25 | 480 | 37 | 39 | 0,95 |
| 2a | Blech schw. | - | 47 | 480 | 17 | 66 | 0,26 |
| 2b | Blech schw. | - | 29 | 480 | 15 | 63 | 0,23 |
| 3a | Füll. lack | - | 12 | 505 | 9 | - | - |
| 3b | Füll. lack | Byk-310 | 13 | 515 | 25 | 82 | 0,30 |
| 3c | Blech schw. | Byk-310 | 20 | 480 | 25 | 75 | 0,33 |
| 3d | Füll. lack | Byk-310 | 14 | 525 | 22 | 87 | 0,25 |
| 3e | Füll. lack | Byk-310 | 12 | 445 | 26 | 68 | 0,38 |
| 3f | Füll. lack | Byk-310 | 15 | 625 | 23 | 102 | 0,23 |
| 3g¹ | Füll. lack | Byk-310 | 17 | 510 | 28 | 69 | 0,41 |
| 3g² | Füll. lack | Byk-310 | 15 | 505 | 22 | 79 | 0,27 |
| 3g³ | Füll. lack | Byk-310 | 15 | 515 | 23 | 76 | 0,30 |
| 3g⁴ | Füll. lack | Byk-310 | 14 | 500 | 21 | 76 | 0,27 |
| 4a | Glas | - | 14 | 485 | - | - | - |
| 4b | Glas | Byk-310 | 14 | 495 | 30 | 71 | 0,42 |

## Patentansprüche

1. Effektlack aus flüssigkristallinen Seitentketten-Polymeren (LPC), in denen die mesogenen Einheiten zumindest näherungsweise chiral-nematisch angeordnet sind,
**dadurch gekennzeichnet,**
daß den Polymeren eine oder mehrere oberflächenaktive, Orientierungs-verbessernde Verbindung(en) zugesetzt ist/sind, die ein selbsttätiges, deutlich farbwirksames, d.h. die Farbwirkung intensivierendes Ausrichten der mesogenen Einheiten in die chiral-nematische Anordnung bei der Lackapplikation bewirken.

2. Effektlack nach Anspruch 1,
**dadurch gekennzeichnet,**
daß die Polymeren aus Polysiloxanen bestehen.

3. Effektlack nach Anspruch 1,
**dadurch gekennzeichnet,**
daß den Polymeren als oberflächenaktive Verbindungen ein Polysiloxan oder ein Polyacrylat hinzugesetzt ist.

4. Effektlack nach Anspruch 1,
**dadurch gekennzeichnet,**
daß den Polymeren die oberflächenaktive Verbindungen in einer Menge von 0,01 bis 5,0 Gew.-% hinzugesetzt sind.

5. Mehrlagig lackierter Gebrauchsgegenstand, insbesondere Fahrzeugkarosserie, mit in der farbbestimmenden Lacklage der Lackierung enthaltenen geschlossenen Film aus vernetzten flüssigkristallinen Seitenketten-Polymeren (LCP), wobei die mesogenen Einheiten zumindest näherungsweise chiral-nematisch angeordnet sind,
**dadurch gekennzeichnet,**
daß die Polymere eine oder mehrere oberflächenaktive, Orientierungs-verbessernde Verbindung(en) enthalten, die ein selbsttätiges, deutlich farbwirksames, d.h. die Farbwirkung intensivierendes Ausrichten der mesogenen Einheiten in die chiral-nematische Anordnung bei der Lackapplikation bewirken.

6. Gebrauchsgegenstand nach Anspruch 5,
**dadurch gekennzeichnet,**
daß die Polymeren aus Polysiloxanen bestehen.

7. Gebrauchsgegenstand nach Anspruch 5,
**dadurch gekennzeichnet,**
daß den Polymeren als oberflächenaktive Verbindungen ein Polysiloxan oder ein Polyacrylat hinzugesetzt ist.

8. Gebrauchsgegenstand nach Anspruch 5,
**dadurch gekennzeichnet,**
daß den Polymeren die oberflächenaktive Verbindungen in einer Menge von 0,01 bis 5,0 Gew.-% hinzugesetzt sind.

9. Verfahren zum Lackieren eines Gebrauchsgegenstandes mit einem Effektlack nach einem der Ansprüche 1 bis 4,
**dadurch gekennzeichnet,**
daß auf den Gebrauchsgegenstand der Lack mittels einer Spritzapplikation oder einer Tauchapplikation aufgebracht wird, wobei sich die mesogenen Einheiten ohne weiteres selbsttätig und deutlich farbwirksam, d.h. in einer die Farbwirkung intensivierenden Weise in die chiral-nematische Anordnung ausrichten.

10. Verfahren nach Anspruch 9,
**dadurch gekennzeichnet,**
daß ein lösungsmittelhaltiges Lacksystem verwendet wird.

11. Verfahren nach den Anspruch 9,
**dadurch gekennzeichnet,**
daß ein wasserhaltiges Lacksystem verwendet wird.

12. Verfahren nach den Anspruch 9,
**dadurch gekennzeichnet,**
daß ein pulverförmiges Lacksystem verwendet wird.

## Claims

1. Effect lacquer made of liquid crystalline side-chain polymers (LPC), in which the mesogenic units are at least approximately in chiral-nematic arrangement,
**characterised in that**
one or more surface-active, orientation-improving compound(s) is/are added to the polymers, which bring about a spontaneous alignment of the mesogenic units in the chiral-nematic arrangement when the lacquer is applied, the said alignment having a clear colour-effect, i.e. a colour-intensifying action.

2. Effect lacquer according to Claim 1,
**characterised in that**
the polymers consist of polysiloxanes.

3. Effect lacquer according to Claim 1,
**characterised in that**
a polysiloxane or a polyacrylate is added to the polymers as the surface-active compound.

4. Effect lacquer according to Claim 1,
**characterised in that**
the surface-active compounds are added to the polymers in an amount of 0.01 to 5.0 weight-%.

5. Commodity lacquered with multiple layers, in particular an auto body, with a sealed film of cross-linked liquid crystalline side-chain polymers (LCP) in the colour-determining lacquer layer of the lacquering, such that the mesogenic units are at least approximately chiral-nematically arranged,
**characterized in that**
the polymers contain one or more surface-active, orientation-improving compound(s) which bring(s) about a spontaneous alignment of the mesogenic units in the chiral-nematic arrangement when the lacquer is applied, the said alignment having a clear colour effect, i.e. a colour-intensifying action.

6. Commodity according to Claim 5,
**characterised in that**
the polymers consist of polysiloxanes.

7. Commodity according to Claim 5,
**characterised in that**
a polysiloxane or a polyacrylate is added to the polymers as the surface-active compound.

8. Commodity according to Claim 5,
**characterised in that**
the surface-active compounds are added to the polymers in an amount of 0.01 to 5.0 weight-%.

9. Process for the lacquering of a commodity with an effect lacquer according to any of Claims 1 to 4,
**characterised in that**
the lacquer is applied to the commodity by spraying or immersion, such that the mesogenic units align themselves unassisted and spontaneously in the chiral-nematic arrangement, the said arrangement having a clear colour effect, i.e. a colour-intensifying action.

10. Process according to Claim 9,
**characterised in that**
a solvent-containing lacquer system is used.

11. Process according to Claim 9,
**characterised in that**
a water-containing lacquer system is used.

12. Process according to Claim 9,
**characterised in that**
a lacquer system in powder form is used.

## Revendications

1. Peinture à effet en polymères à cristaux liquides en chaînes latérales (PCL) dans lesquels les motifs mésogènes sont, au moins approximativement, en disposition chirale-nématique,
caractérisée en ce que
on a ajouté aux polymères un ou plusieurs composés tensioactifs améliorant l'orientation, qui provoquent à l'application de la peinture une orientation spontanée des motifs mésogènes dans la disposition chiralenématique, orientation nettement active sur la couleur, c'est-à-dire qui intensifie l'effet de couleur.

2. Peinture à effet selon la revendication 1,
caractérisée en ce que
les polymères consistent en polysiloxanes.

3. Peinture à effet selon la revendication 1,
caractérisée en ce que
l'on ajoute aux polymères, en tant que composé tensioactif, un polysiloxane ou un polyacrylate.

4. Peinture à effet selon la revendication 1,
caractérisée en ce que
l'on ajoute les composés tensioactifs aux polymères en quantité de 0,01 à 5,0 % en poids.

5. Objet usuel, en particulier carrosserie de véhicule, peint à plusieurs couches avec, dans la couche de peinture du revêtement qui détermine la teinte, une pellicule continue de polymères à cristaux liquides en chaînes latérales, réticulés (PCL), dont les motifs mésogènes sont, au moins approximativement, en disposition chirale-nématique,
caractérisé en ce que
les polymères contiennent un ou plusieurs composés tensioactifs qui provoquent, à l'application de la peinture, une orientation spontanée des motifs mésogènes dans la disposition chirale-nématique, orientation nettement active sur la teinte, c'est-à-dire qui intensifie l'effet de couleur.

6. Objet usuel selon la revendication 5,
caractérisé en ce que
les polymères consistent en polysiloxanes.

7. Objet usuel selon la revendication 5,
caractérisé en ce que
l'on a ajouté aux polymères, en tant que composé tensio-actif, un polysiloxane ou un polyacrylate.

8. Objet usuel selon la revendication 5,
caractérisé en ce que
l'on a ajouté les composés tensioactifs aux polymères en quantités de 0,01 à 5,0 % en poids.

9. Procédé pour peindre un objet usuel par une peinture à effet selon l'une des revendications 1 à 4,
caractérisé en ce que
l'on applique la peinture sur l'objet usuel à l'aide d'un pistolet ou par immersion, les motifs mésogènes s'orientant alors spontanément avec un net effet sur la couleur, c'est-à-dire avec intensification de l'effet coloré.

10. Procédé selon la revendication 9,
caractérisé en ce que
l'on utilise une composition de peinture contenant des solvants.

11. Procédé selon la revendication 9,
caractérisé en ce que
l'on utilise une composition de peinture aqueuse.

12. Procédé selon la revendication 9,
caractérisé en ce que
l'on utilise une composition de peinture en poudre.
